# EUROPEAN PATENT SPECIFICATION

(11) **EP 0 911 211 B1**
(45) Date of publication and mention of the grant of the patent: **13.08.2003**
(21) Application number: 98118829.5
(22) Date of filing: 06.10.1998
(51) Int. Cl.: B60N 2/48

(54) **Connector assembly for removable device**
Steckverbindungsgruppe für einer abnehmbaren Vorrichtung
Ensemble de connection pour dispositif démontable

(30) Priority: 17.10.1997 GB 9722059
(43) Date of publication of application: 28.04.1999
(73) Proprietor: THE WHITAKER CORPORATION, Wilmington, Delaware 19808 (US)
(72) Inventor: Langridge, Gary, St. Albans, Hertfordshire, AL4 0AA (GB)
(74) Representative: Heinz-Schäfer, Marion

(56) References cited:
- EP-A- 0 469 979
- WO-A-97/45290
- DE-A- 19 619 323
- DE-U- 29 719 937
- US-A- 5 106 159
- US-A- 5 204 667

## Description

This invention relates to a connector for electrically interconnecting a removable device such as a headrest to a stationary device such as a seat.

There is a demand in the automotive industry to have electrically operated devices in seat headrests, for example lights and electrically ignited airbags. As headrests need to be easily adjustable in height, and easily removed and replaced. A robust and reliable electrical connection is required. The electrical connection should also permit various devices to be interconnected. It would be advantageous to enable the headrest to be removed and replaced with similar ease than that of conventional headrests.

It is an object of this invention to provide an electrical connector assembly for interconnecting a removable device to a complementary device, the connector assembly enabling easy mounting or removing of the removable yet ensuring reliable electrical connection.

Objects of this invention have been achieved by providing the connector assembly according to claim 1. Disclosed herein is a connector assembly for electrically interconnecting a removable and height adjustable device such as a headrest to a complementary device such as a seat, the assembly comprising a movable device or headrest connector securely mountable to a branch of the movable device or headrest, and a complementary device or seat connector mountable in the complementary device or seat for plugging connection with the headrest connector, wherein the seat connector comprises a stationary housing and a mobile housing having terminals therein for mating with terminals of the headrest connector, the stationary housing for stationary fixing to the seat, and the mobile housing slideable in a direction of plugging of the headrest connector with respect to the stationary housing, the mobile connector housing comprising latch members engaging complementary latch members on the stationary housing when the headrest connector is unplugged from the seat connector, the latching members of the seat connector having release cam surfaces engageable with complementary cams on the headrest connector during plugging such that the latch members between the mobile and stationary housings disengage to permit sliding of the mobile housing and headrest connector in the plugging direction. The mobile housing may be provided with resilient latches engaging latching shoulders on the stationary housing, the camming surfaces provided proximate or at free ends of the latches. The headrest connector cams may be in the form of protrusions or studs that insert between the latch arms thereby spreading them apart and disengaging inwardly projecting latching shoulders thereof with complementary latching shoulders of the stationary housing. The mobile housing may be provided with further resilient latches having protrusions that engage in complementary recesses in the headrest connector for retaining the connectors in the plugged condition. The protrusions and corresponding recesses may have complementary rounded or tapered surfaces that resiliently bias the mating connectors into a stable mated position, yet allowing unplugging when a certain pulling force is exerted on the headrest connector. A pair of the connector latches may be provided in a plane at 90° to a pair of the latch members for engaging the stationary housing such that a compact connector system is provided. The headrest connector may be provided with a substantially cylindrical outer shape with slight detents for receiving the seat connector latches, such that an unobtrusive external shape is provided which is less prone to damage.

While reference herein is made to a headrest and seat and connectors therefor, it is to be understood that the invention is applicable to other embodiments of devices to be assembled in an automobile or other apparatus, where one of the devices is removably and movably mountable to a complementary device.

Further advantageous aspects of this invention will be described in the claims, or will be apparent from the following description or drawings.

An embodiment of this invention will now be described by way of example with reference to the figures in which:
Figure 1 is an exploded isometric view of a connector assembly according to this invention, and portions of a headrest and seat;
Figure 2 is an isometric view of the assembly of Figure 1 assembled;
Figure 3 is a top view of a seat connector of the assembly;
Figure 4 is a cross-sectional view through lines 4-4 of Figure 3 with a headrest connector plugged to the seat connector;
Figure 5 is a cross-sectional view through lines 5-5 of Figure 3 similarly with a headrest connector plugged to a seat connector;
Figure 6 is an isometric view showing a headrest connector about to be plugged to a seat connector which is shown in partial cross-section;
Figure 7 is a view similar to Figure 6 in an initial plugging state of the connector;
Figure 8 is a view similar to Figure 7 showing a further state in plugging of the connectors; and
Figure 9 is a view similar to Figure 8 showing the connectors fully plugged together.

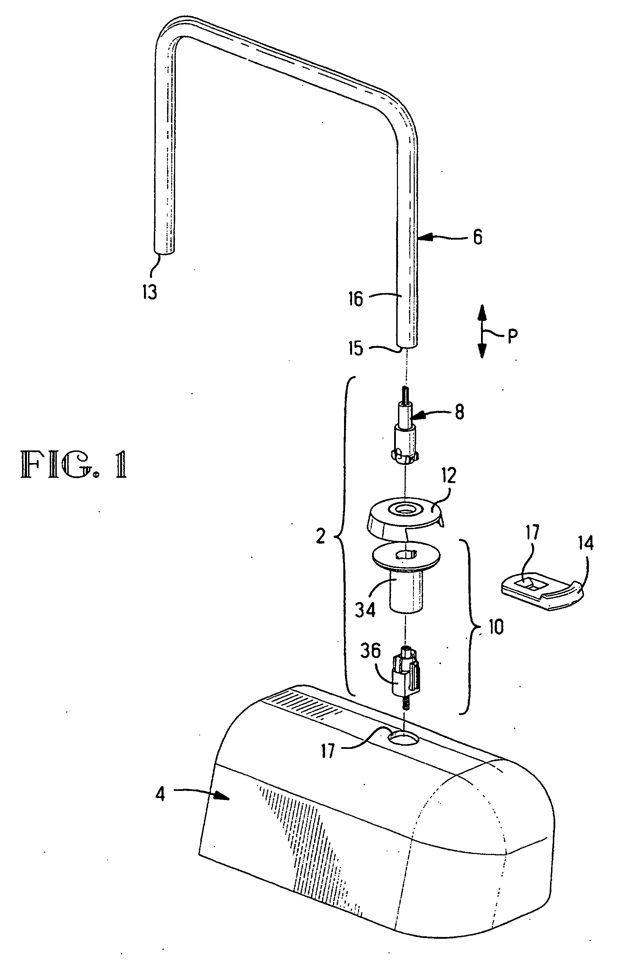

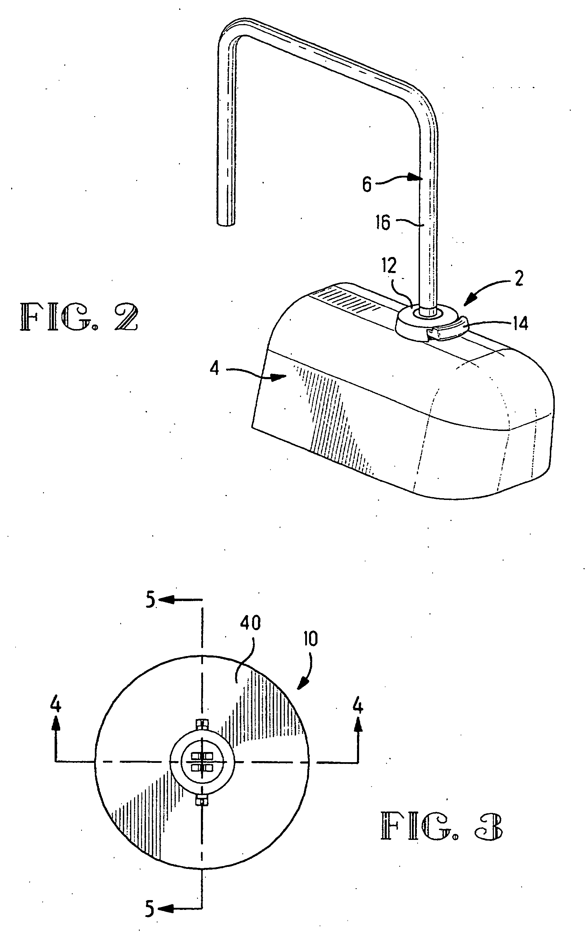

Referring to Figures 1 and 2, a connector assembly 2 for electrically interconnecting a complementary device, in this case a seat 4 to a movable device, in this case a headrest 6, comprises a movable device or headrest connector 8, a complementary device or seat connector 10, a protective cover 12 and a (headrest) height release actuator 14. The headrest 6 has a mounting bracket 16 in the form of a hollow pipe bent substantially into a U-shape and having plugging ends 13,15 insertable into corresponding holes 17 in a plugging direction (P) into the seat 4. As in conventional headrests, the release actuator 14 is resiliently mounted in the cover 12 and can be depressed to disengage a tooth 17 from corresponding teeth (not shown) along the height of the bracket 16, to enable height adjustment of the headrest with respect to the seat.

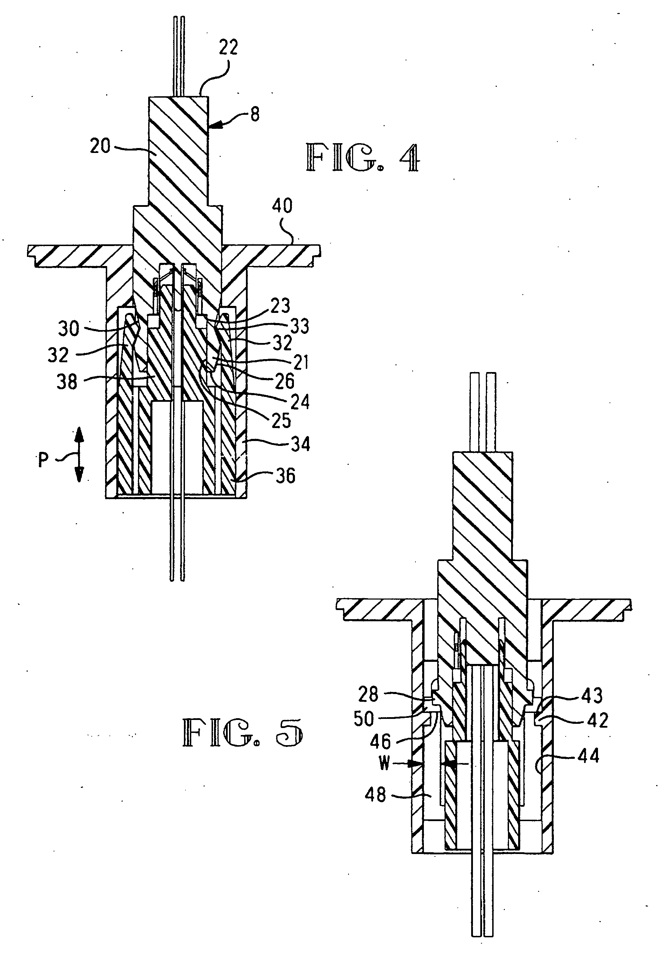

Referring to Figures 3 to 9, the headrest connector 8 comprises a housing 20 in which are mounted a plurality of terminals (not shown) for mating with terminals of the seat connector. The housing 20 extends from a conductor receiving end 22 to a mating end 23, the housing further comprising a shroud 21 extending beyond the mating end 23 to a free end 24, the shroud defining a cavity 25 for receiving the mating connector therein. The shroud 21 ensures that the terminals of the headrest connector 20 are well protected and that plugging between complementary terminals occurs only when the headrest and seat connector are securely located and stably positioned with respect to each other. The latter is important in view of the large unplugging and plugging forces that may be exerted in removing or positioning the headrest. The outer surface of the shroud also has a tapered lead guide portion 26 for assisting entry into the seat connector. The headrest connector further comprises a pair of cams 28 projecting from opposed sides of the shroud, and a pair of opposed retention elements in the form of shallow inwardly tappered depressions or recesses 30 for engagement with complementary retention elements of the seat connector.

The seat connector 10 comprises a stationary housing 34 and a mobile housing 36 slideable in the plugging direction (P) with respect to the stationary housing 34, the mobile housing 36 receiving terminals of the seat connector for mating with the headrest connector. The mobile housing has cantilever beam latches 32 with retaining protrusions 33 proximate free ends thereof for engagement in the headrest connector recesses 30. The mobile housing 36 has a mating portion 38 with a non-axisymmetric shape complementary to the shroud cavity 25 for securely locating and polarising the connectors with respect to each other prior to plugging of the terminals. The stationary housing 34 comprises a flange 40 extending laterally at an upper end thereof for mounting and positioning on an outer edge of the seat. The stationary housing is provided with latch elements 42 in the form of protrusions with locking shoulders 43 extending from an inside surface 44 of the stationary housing, for engaging complementary locking shoulders 46 of the mobile housing, provided on resilient latch arms 48. The latch arms are in the form of a cantilever beam integrally formed with and attached to the mobile housing 34. The latch arms 48 have release cam surfaces 50 proximate free ends for engaging the cams 28 of the headrest connector 8.

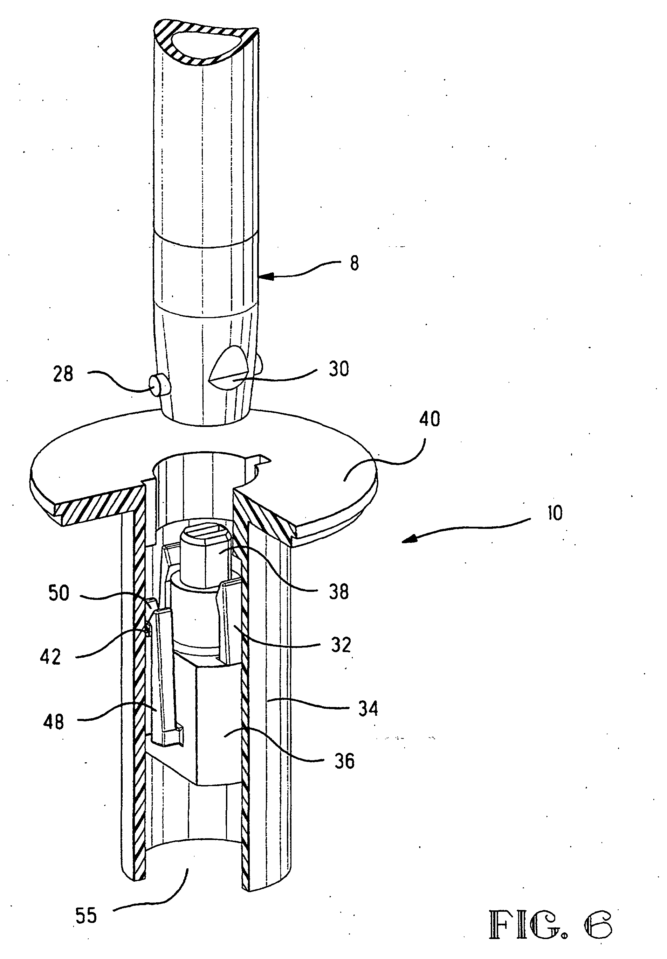

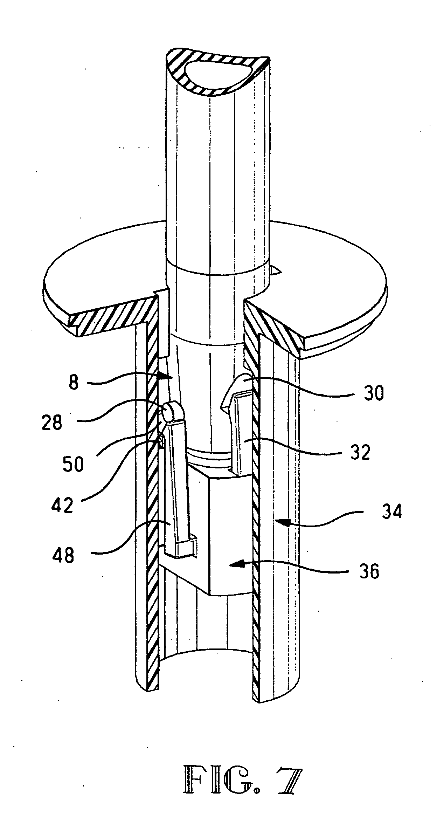

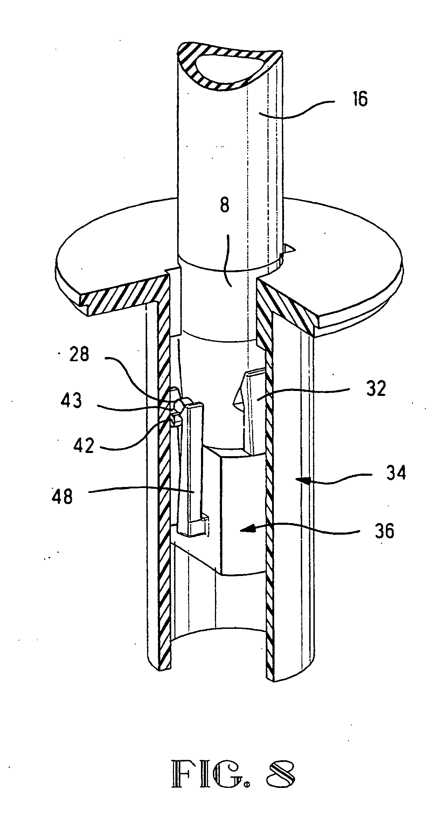

As best seen in Figures 5 and 6, the latches 48 engage the complementary latch member 42 when the mobile connector is in an uppermost position corresponding to the uncoupled state when the headrest connector 8 is uncoupled from the seat connector 10. As best seen in Figure 5, the latch width (W) is greater than the width of the locking shoulder 43 of the stationary latching member 42, such that the headrest connector cams (studs) 28 are insertable past the stationary housing latch members 42 in the plugging direction (P) as best seen in Figure 5. The headrest cams 28 however are engageable with the camming surfaces 50 for biasing apart the latch arms 48 such that the complementary latching shoulders 46,43 of the stationary and mobile housings disengage as shown in Figure 8. Engagement of the camming surfaces occurs when the headrest connector is fully coupled with the mobile housing and terminals in the position shown in Figure 7, where the connector latches 32 engage with the complementary latch recesses 30 of the headrest connector. The latches resiliently grip in the recess 30 whereby the connectors can be released by simply exerting sufficient force on the headrest in the unplugging direction. The resilient latching force however is sufficient to ensure that the mobile housing is returned to the fully uncoupled state whereby the latch arms 48 lock onto the complementary latching stud 42 of the stationary housing.

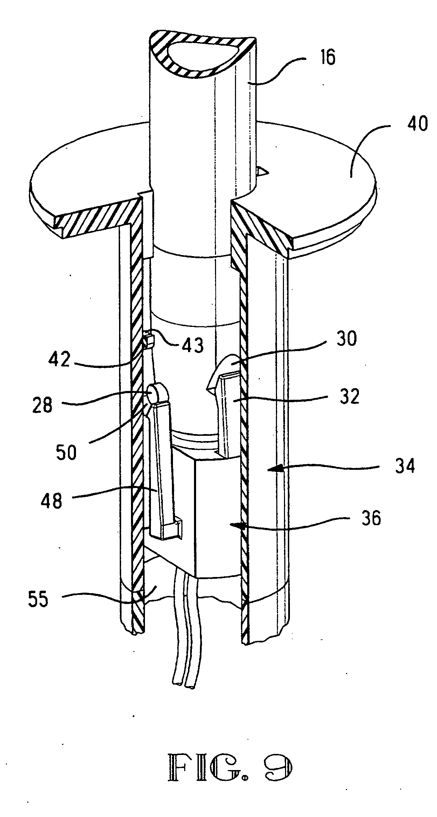

As best seen in Figure 9, once full plugging has occurred and the latches between the mobile and stationary housings are released, the mobile housing and terminals are fully mounted to the headrest connector and slideable in the seat guide tube 55 such that the height of the headrest can be adjusted with respect to the seat. A particularly compact mobile connector system that is receivable in the guide tube 55 is provided with the connector latches 32 in a plane which is substantially orthogonal to the position of the latches 48 that support the mobile housing in the unplugged state. The provision of the slight recess 30 in the headrest connector for latching with the mobile seat connector provides a non-obtrusive latching system that is particularly robust and less prone to damage when the headrest is removed from the seat. Particularly simple, robust and reliable connector system allowing height adjustment of a headrest or other device and removal of the headrest or device is thus provided.

## Claims

1. An electrical connector assembly (2) for electrically interconnecting a removable and height adjustable device such as a headrest (6) to a seat (4), the assembly comprising a movable device connector (8) securely mountable to a bracket (16) of the device such as the headrest, and a complementary device connector such as a seat connector (10) mountable in the complementary device such as the seat for plugging connection with the moveable device connector, wherein the complementary device connector comprises a stationary housing (34) and a mobile housing (36) having terminals therein for mating with terminals of the movable device connector, the stationary housing (34) for stationary fixing to the complementary device, and the mobile housing (36) slideable in a direction of plugging (P) of the movable device connector with respect to the stationary housing, the mobile housing comprising latch members (46,48) engaging complementary latch members (42) on the stationary housing in a disconnected state when the connector such as a headrest connector is unplugged from the complementary device connector, the latch members (46,48,42) of the complementary device connector having release cam surfaces (50) engageable with complementary cams (28) on the movable device connector during plugging such that the latch members between the mobile and stationary housings disengage to permit sliding of the mobile housing (36) and movable device connector (8) in the plugging direction (P).

2. The connector assembly of claim 1 wherein the latch members of the mobile housing (36) are resilient and provided with the cam surfaces (50) that engage the cams (28) of the movable device connector, engagement causing the resilient latches (48) to bias out of engagement with complementary latch members (42) of the stationary housing.

3. The assembly of claim 2 wherein the latch members of the stationary housing comprise substantially rigid protrusions (42) provided with locking surfaces (43), the protrusions extending from an inner surface (44) of the stationary housing (34).

4. The assembly of any one of the preceding claims wherein the stationary housing (34) has a substantially tubular shape with a flange (40) extending laterally from an upper end thereof for engagement around an edge of the seat (4).

5. The assembly of any one of the preceding claims wherein the cams (28) of the movable device connector are in the form of studs that protrude beyond a substantially axisymmetric outer surface of the connector such as a headrest connector.

6. The assembly of any one of the preceding claims wherein the mobile housing comprises resilient latch arms (32) with latching protrusions (33) proximate free ends thereof for engaging in complementary latching recesses (30) of the movable device connector, the protrusions (33) having tapered retention surfaces that enable unplugging upon exertion of a certain pulling force in the unplugging direction.

7. The assembly of any one of the preceding claims wherein the movable device connector has latch recesses (30) for engaging with latches of the complementary device connector in order to maintain the connectors in the coupled state, the latch recesses formed by slightly tapered latching surfaces defining a shallow recess within the substantially axisymmetric outer surface of the movable device connector.

8. The assembly of any one of the preceding claims wherein the movable device connector extends from a connection end (22) to a mating end (23) in the plugging direction (P), the connector further comprising a shroud (21) extending from the mating end (23) in the plugging direction and forming a cavity (25) for receiving a mating portion (38) of the mobile housing therein prior to coupling of the terminals.

## Patentansprüche

1. Elektrische Verbinderanordnung (2) für das elektrische Verbinden einer abnehmbaren und höhenverstellbaren Vorrichtung, wie beispielsweise einer Kopfstütze (6), mit einem Sitz (4), wobei die Anordnung aufweist: einen beweglichen Vorrichtungsverbinder (8), der sicher an einer Halterung (16) der Vorrichtung, wie beispielsweise der Kopfstütze, montiert werden kann; und einen komplementären Vorrichtungsverbinder, wie beispielsweise einen Sitzverbinder (10), der in der komplementären Vorrichtung, wie beispielsweise dem Sitz, für eine Steckverbindung mit dem beweglichen Vorrichtungsverbinder montiert werden kann, worin der komplementäre Vorrichtungsverbinder ein stationäres Gehäuse (34) und ein bewegliches Gehäuse (36) mit Anschlußklemmen darin für einen Eingriff mit Anschlußklemmen des beweglichen Vorrichtungsverbinders aufweist, wobei das stationäre Gehäuse (34) für ein stationäres Befestigen an der komplementären Vorrichtung vorhanden ist und das bewegliche Gehäuse (36) in einer Steckrichtung (P) des beweglichen Vorrichtungsverbinders mit Bezugnahme auf das stationäre Gehäuse verschiebbar ist, wobei das bewegliche Gehäuse Einklinkelemente (46, 48) aufweist, die mit komplementären Einklinkelementen (42) am stationären Gehäuse in einem getrennten Zustand in Eingriff kommen, wenn der Verbinder, wie beispielsweise der Kopfstützenverbinder, aus dem komplementären Vorrichtungsverbinder herausgezogen wird, wobei die Einklinkelemente (46, 48, 42) des komplementären Vorrichtungsverbinders Freigabenockensteuerflächen (50) aufweisen, die mit komplementären Nocken (28) am beweglichen Vorrichtungsverbinder während des Steckens in Eingriff kommen können, so daß die Einklinkelemente zwischen dem beweglichen und dem stationären Gehäuse außer Eingriff kommen, um das Verschieben des beweglichen Gehäuses (36) und des beweglichen Vorrichtungsverbinders (8) in der Steckrichtung (P) zu gestatten.

2. Verbinderanordnung nach Anspruch 1, bei der die Einklinkelemente des beweglichen Gehäuses (36) elastisch und mit Nockensteuerflächen (50) versehen sind, die mit den Nocken (28) des beweglichen Vorrichtungsverbinders in Eingriff kommen, wobei der Eingriff bewirkt, daß die elastischen Klinken (48) außer Eingriff mit den komplementären Einklinkelementen (42) des stationären Gehäuses gelenkt werden.

3. Anordnung nach Anspruch 2, bei der die Einklinkelemente des stationären Gehäuses im wesentlichen starre Vorsprünge (42) aufweisen, die mit Sperrflächen (43) versehen sind, wobei sich die Vorsprünge von einer inneren Fläche (44) des stationären Gehäuses (34) aus erstrecken.

4. Anordnung nach einem der vorhergehenden Ansprüche, bei der das stationäre Gehäuse (34) eine im wesentlichen rohrartige Form mit einem Flansch (40) aufweist, der sich seitlich von einem oberen Ende davon für einen Eingriff um einen Rand des Sitzes (4) herum erstreckt.

5. Anordnung nach einem der vorhergehenden Ansprüche, bei der die Nocken (28) des beweglichen Vorrichtungsverbinders in der Form von Bolzen vorliegen, die über eine im wesentlichen achsensymmetrische äußere Fläche des Verbinders, wie beispielsweise eines Kopfstützenverbinders, hinausragen.

6. Anordnung nach einem der vorhergehenden Ansprüche, bei der das bewegliche Gehäuse elastische Einklinkarme (32) mit Einklinkvorsprüngen (33) nahe der freien Enden davon für einen Eingriff in komplementäre Einklinkaussparungen (30) des beweglichen Vorrichtungsverbinders aufweisen, wobei die Vorsprünge (33) kegelförmige Arretierflächen aufweisen, die bei Ausübung einer bestimmten Zugkraft in der Herausziehrichtung ein Herausziehen ermöglichen.

7. Anordnung nach einem der vorhergehenden Ansprüche, bei der der bewegliche Vorrichtungsverbinder Einklinkaussparungen (30) für einen Eingriff mit Klinken des komplementären Vorrichtungsverbinders aufweist, um die Verbinder im gekoppelten Zustand zu halten, wobei die Einklinkaussparungen, die durch schwach kegelförmige Einklinkflächen gebildet werden, eine flache Aussparung innerhalb der im wesentlichen achsensymmetrischen äußeren Fläche des beweglichen Vorrichtungsverbinders definieren.

8. Anordnung nach einem der vorhergehenden Ansprüche, bei der sich der bewegliche Vorrichtungsverbinder von einem Verbindungsende (22) zu einem Eingriffsende (23) in der Steckrichtung (P) erstreckt, wobei der Verbinder außerdem einen Verstärkungsrand (21) aufweist, der sich vom Eingriffsende (23) in der Steckrichtung erstreckt und einen Hohlraum (25) für das Aufnehmen eines Eingriffsabschnittes (38) des beweglichen Gehäuses darin vor dem Koppeln der Anschlußklemmen bildet.

## Revendications

1. Assemblage de connecteur électrique (2) destiné à assurer l'interconnexion électrique d'un dispositif amovible et à hauteur ajustable, par exemple un appuie-tête (6), à un siège (4), l'assemblage comprenant un connecteur d'un dispositif mobile (8) pouvant être monté fermement sur une console (16) du dispositif, par exemple d'un appuie-tête, et un connecteur d'un dispositif complémentaire, par exemple un connecteur de siège (10), pouvant être monté dans le dispositif complémentaire, par exemple le siège, en vue d'une connexion par enfichage au connecteur du dispositif mobile, le connecteur du dispositif complémentaire comprenant un boîtier stationnaire (34) et un boîtier mobile (36) contenant des bornes destinées à être accouplées à des bornes du connecteur du dispositif mobile, le boîtier stationnaire (34) étant destiné à être fixé de manière stationnaire sur le dispositif complémentaire, et le boîtier mobile (36) pouvant glisser dans une direction d'enfichage (P) du connecteur du dispositif mobile par rapport au boîtier stationnaire, le boîtier mobile comprenant des éléments de verrouillage (46, 48) s'engageant dans des éléments de verrouillage complémentaires (42) sur le boîtier stationnaire dans un état déconnecté, lorsque le connecteur, par exemple un connecteur d'appuie-tête, est déconnecté du connecteur du dispositif complémentaire, les éléments de verrouillage (46, 48, 42) du connecteur du dispositif complémentaire comportant des surfaces à cames de dégagement (50) pouvant s'engager dans des cames complémentaires (28) sur le connecteur du dispositif mobile au cours de l'accouplement, de sorte que les éléments de verrouillage entre les boîtier mobile et stationnaire sont dégagés pour permettre le glissement du boîtier mobile (36) et du connecteur du dispositif mobile (8) dans la direction d'enfichage (P).

2. Assemblage de connecteur selon la revendication 1, dans lequel les éléments de verrouillage du boîtier mobile (36) sont élastiques et comportent des surfaces à cames (50) s'engageant dans les cames (28) du connecteur du dispositif mobile, l'engagement entraînant le dégagement par poussée des verrous élastiques (48) des éléments de verrouillage complémentaires (42) du boîtier stationnaire.

3. Assemblage selon la revendication 2, dans lequel les éléments de verrouillage du boîtier stationnaire comprennent des saillies pratiquement rigides (42) comportant des surfaces de verrouillage (43), les saillies s'étendant à partir d'une surface interne (44) du boîtier stationnaire (34).

4. Assemblage selon l'une quelconque des revendications précédentes, dans lequel le boîtier stationnaire (34) a une forme pratiquement tubulaire, une bride (40) s'étendant latéralement à partir d'une extrémité supérieure correspondante en vue d'un engagement autour d'un bord du siège (4).

5. Assemblage selon l'une quelconque des revendications précédentes, dans lequel les cames (28) du connecteur du dispositif mobile ont la forme de goujons débordant au-delà d'une surface externe pratiquement axisymétrique du connecteur, par exemple d'un connecteur d'appuie-tête.

6. Assemblage selon l'une quelconque des revendications précédentes, dans lequel le boîtier mobile comprend des bras de verrouillage élastiques (32) avec des saillies de verrouillage (33) près des extrémités libres correspondantes, destinées à s'engager dans des évidements de verrouillage complémentaires (30) du connecteur du dispositif mobile, les saillies (33) comportant des surfaces de retenue effilées permettant le désaccouplement lors de l'application d'une force de traction définie dans la direction de désaccouplement.

7. Assemblage selon l'une quelconque des revendications précédentes, dans lequel le connecteur du dispositif mobile comporte des évidements de verrouillage (30) destinés à s'engager dans des verrous du connecteur du dispositif complémentaire en vue de retenir les connecteurs dans l'état accouplé, les évidements de verrouillage étant formés par des surfaces de verrouillage légèrement effilées définissant un évidement peu profond dans la surface externe pratiquement axisymétrique du connecteur du dispositif mobile.

8. Assemblage selon l'une quelconque des revendications précédentes, dans lequel le connecteur du dispositif mobile s'étend d'une extrémité de connexion (22) vers une extrémité d'accouplement (23) dans la direction d'enfichage (P), le connecteur comprenant en outre une enveloppe (21) s'étendant à partir de l'extrémité d'accouplement (23) dans la direction d'enfichage et formant une cavité (25) destinée à recevoir une partie d'accouplement (38) du boîtier mobile avant l'accouplement des bornes.
